Europäisches Patentamt

European Patent Office

Office européen des brevets

(11) Publication number: **0 192 659 B1**

# EUROPEAN PATENT SPECIFICATION

(45) Date of publication of patent specification: **27.10.93**   (51) Int. Cl.5: **G01B 11/16**, G01J 5/08, G01J 5/38

(21) Application number: **85903956.2**

(22) Date of filing: **31.07.85**

(86) International application number:
**PCT/US85/01450**

(87) International publication number:
**WO 86/01286 (27.02.86 86/05)**

(54) DISTRIBUTED, SPATIALLY RESOLVING OPTICAL FIBER STRAIN GAUGE.

(30) Priority: **13.08.84 US 640490**

(43) Date of publication of application:
**03.09.86 Bulletin 86/36**

(45) Publication of the grant of the patent:
**27.10.93 Bulletin 93/43**

(84) Designated Contracting States:
**DE FR GB IT**

(56) References cited:
**WO-A-81/00618        GB-A- 1 536 340
US-A- 3 458 257        US-A- 3 891 302
US-A- 4 268 116        US-A- 4 286 838
US-A- 4 400 056**

**APPLIED OPTICS, vol. 21, no. 17, 1st September 1982, pages 3059-3060, Optical Society of America; S.K. YAO et al.: "Microbending loss in a single-mode fiber in the pure-bend loss regime"**

(73) Proprietor: **UNITED TECHNOLOGIES CORPORATION**
**United Technologies Building
1, Financial Plaza
Hartford, CT 06101(US)**

(72) Inventor: **MELTZ, Gerald**
**77 Daventry Hill Road
Avon, CT 06001(US)**
Inventor: **GLENN, William, H.**
**41 Marjorie Lane
Vernon, CT 06066(US)**
Inventor: **SNITZER, Elias**
**56 Ivy Road
Wellesley, MA 02181(US)**

(74) Representative: **Waxweiler, Jean et al**
**OFFICE DENNEMEYER S.à.r.l.
P.O. Box 1502
L-1015 Luxembourg (LU)**

# Description

This invention relates to the optical detection and measurement of strain distributions with multi-wavelength light provided to a grating being constituted by a series of periodic refractive index variations.

It is known to determine the distribution of axial strain or temperature along the length of a fiber optic sensor according to the technique described by S. K. Yao et al. in 21 Applied Optics (1982) pages 3059-3060. According to this technique, very small deformations at the interface between an optical core and its cladding will cause light measurably to couple from core to cladding modes. This permits measurements by time-domain reflectometry or a series of cladding taps to determine transmission loss and the distribution of applied perturbations.

US-A-4 400 056 discloses an evanescent-wave fiber reflector in which grooves in the cladding or core of an optical fiber cause a quasi periodical fluctuation in the refractive index.

GB-A-1536340 discloses a transducer including a flexible transducer member having a set of grooves in one major surface thereof whereby flexure of the member produces a periodic strain pressure which extends across an optical wave guide which forms part of the member.

According to the invention there is provided a strain sensor as claimed in the independent claim 1. Embodiments of the invention are described in the dependant claims.

The invention will now be described by way of example with reference to the accompanying drawings, wherein:

Fig. 1 is a schematic drawing of the spatially resolving optical fiber strain gauge according to the invention addressed herein;

Figs. 2A through 2C are partial schematics of selected sections of the optical waveguide including its cores, indicating grating patterns of varying spacing corresponding to selected regions A, B and C in a mechanical structure being monitored for strain;

Fig. 3 is a graph of the intensity spectrum of the reflected light produced by injecting broadband light into the core of the waveguide with shifts in the spectral lines indicating strain at specific stations; and

Fig. 4 shows a schematic illustration of a technique for establishing a grating pattern of variable spacing at selected positions along the length of the optical waveguide.

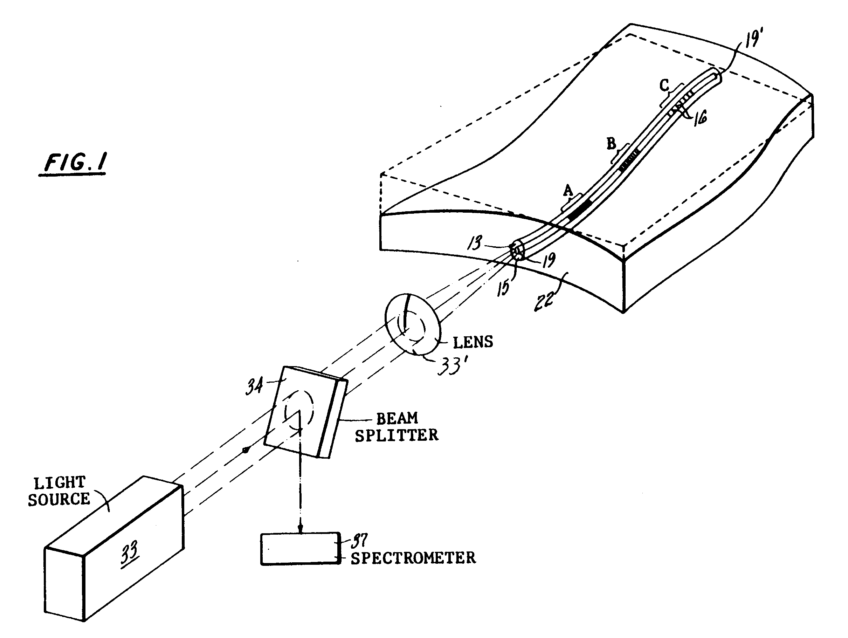

Fig. 1 shows a schematic diagram of the spatially resolving optical fiber strain gauge 13. The gauge 13 includes an optical waveguide 15 or fiber operative to transmit a single or lowest order mode of injected light.

The core 19 of waveguide 15 is preferably a Germanium-doped silica or glass filament. The core 15 contains a series of variable spacing Bragg reflection gratings 16 written, impressed or otherwise applied by application of a variable two-beam ultraviolet (less thin 300 nanometers) interference pattern. These periodic gratings 16 or refractive index perturbations are permanently induced by exposure to intense radiation.

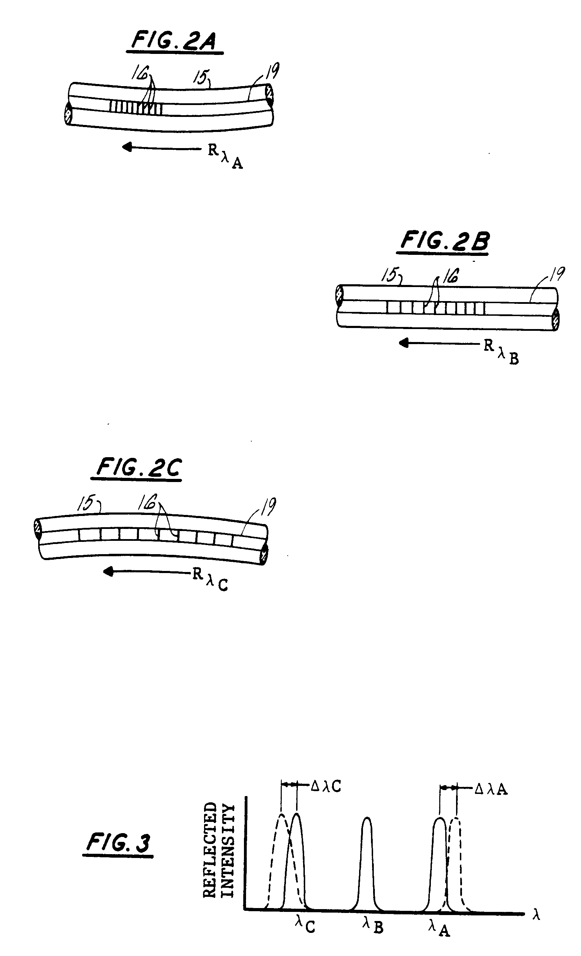

Figs. 2A through 2C shows the establishment of different wavelength gratings 16 corresponding to respective locations on core 19.

Each of selected gratings 16 is formed by transverse irradiation with a particular wavelength of light in the ultraviolet absorption band of the core material associated with a position in a structural component 22. This procedure establishes a first order absorption process by which gratings 16 each characterized by a specific spacing and wavelength can be formed by illuminating core 19 from the side with two coplanar, coherent beams incident at selected and complementary angles thereto with respect to the axis of core 19. The grating period is selected by varying the selected angles of incidence. Thus, a permanent change in the refractive index is induced in a predetermined region of core 19, in effect creating a phase grating effective for affecting light in core 19 at selected wavelengths.

As indicated in Fig. 1 the optical waveguide 15 and core 19 are attached or embedded in a section of structural component 22, in particular a plate for example. Core 19 contains characteristic periodic refractive index perturbations or gratings 16 in regions A, B and C thereof. A broadband light source 33 or tunable laser is focused through lens 33' onto the exposed end of core 19. A beam splitter 34 serves to direct the return beam from core 19 toward a suitable readout or spectrometer 37 for analysis. Alternatively, a transmitted beam passing out of the end 19' of core 19 could be analyzed.

The spectrum of the reflected light intensities from strain gauge 13 is shown in Fig. 3. A complementary spectrum is also established passing out of the end 19' of core 19. The spectrum contains three narrowband output lines centered at respective wavelengths: $\lambda_A$, $\lambda_B$ and $\lambda_C$. These output signals arise by Bragg reflection or diffraction from the phase gratings 16 at respective regions A, B and C. In this example, regions A and C of structural component 22 have been strained by deformation, causing a compression and/or dilation of the periodic perturbations in the fiber core.

As a result, the corresponding spectral lines are shifted as shown in Fig. 3 to the dotted lines indicated. The respective wavelength differences delta lambda$_A$ and delta lambda$_C$ are proportional to strain in respective regions A and C.

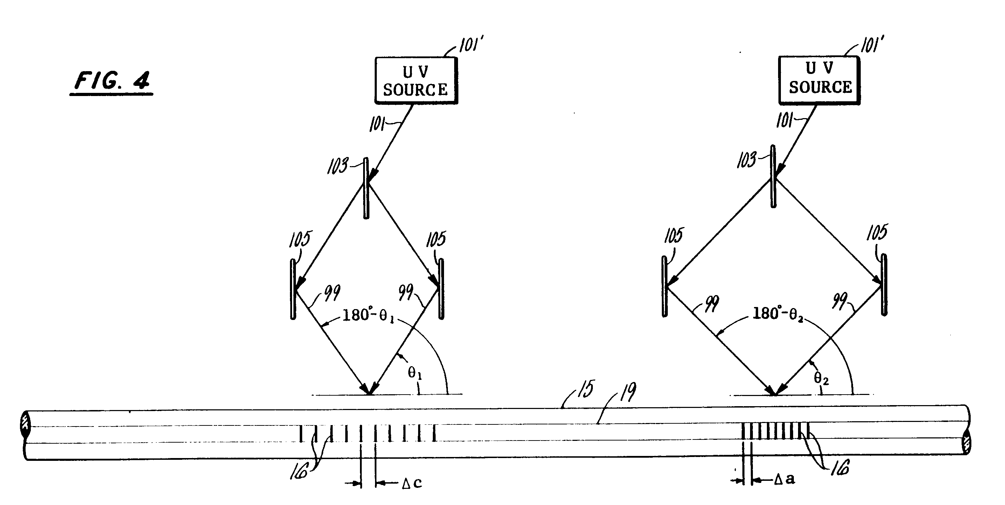

Fig. 4 illustrates the formation of periodic perturbations or gratings 16 in a region of fiber core 19 in response to exposure of core 19 to intense transverse ultraviolet radiation. Grating spacings $\Delta a$ and $\Delta c$ are controlled by the incidence angle of incident interfering beams 99 and beam 101. As can be seen, the angles of incidence of beams 99 are complements (i.e. their sum equals 180 degrees) to each other with respect to the axis of core 19. The incident pair of beams 99 can be derived from a single incident beam 101 passing in part through a beam splitter 103 and reflecting from spaced parallel reflectors 105. By increasing the separation between reflectors 105 and correspondingly varying the angles of incidence of beam 101, the angles of incidence of beams 99 upon core 19 can be controlled. Accordingly, the fringe spacing in grating 16 is varied as desired along the length of core 19, to permit a determination of strain or temperature corresponding to location along gauge 13.

Several gratings can be superimposed or colocated by this technique for the response set forth below.

Sensitivity to external perturbations upon structural component 22 and thus also upon core 19 depends upon the Bragg condition for reflected wavelength. In particular, the fractional change in wavelength due to mechanical strain or temperature change is:

$$d(lambda_i)/lambda_i = (q + \alpha)\Delta T + (1 + [\delta n/\delta \epsilon]/\eta)\epsilon$$
$$\simeq 8 \times 10^{-6}/{}^\circ C$$
$$+ 8 \times 10^{-7}/\text{microstrain, where:}$$

q is the thermooptic coefficient, which is wavelength dependent;

$\alpha$ is the expansion coefficient;

$\epsilon$ is the axial or longitudinal strain;

lambda$_i$ is the wavelength reflected by the grating at location i along the core 19;

n is the refractive index of the optical waveguide; and

$\Delta T$ is the change in temperature.

This relationship suggests a way to compensate for temperature changes along the length of the fiber sensor. In particular, if superimposed gratings of different spacings are Provided, each of the two gratings will be subject to the same level of strain, but the fractional change in wavelength of each grating will be different because q is wavelength dependent.

Accordingly, each pair of superimposed gratings will display a corresponding pair of peaks of reflected or transmitted intensity. Accordingly, the shifts of these peaks due to a combination of temperature and strain can be subtracted. The shifts in these peaks due to strain will be the same in magnitude. Accordingly, any remaining shift after subtraction is temperature related. Thus, when it is desired to know the strain difference as between several locations possibly subject to a temperature difference, the temperature factor can be compensated.

The relationship therefore permits compensation for temperature variation during measurement, since the photoelastic and thermooptic effects are wavelength dependent. In other words, by superimposing two or more gratings at each location of interest, two or more spectral lines are established at each point of measurement. Strain will affect both lines equally; temperature will not. Thus, sufficient information is available to permit determination of the magnitude of strain and the temperature difference.

## Claims

1. A strain sensor comprising an optical waveguide (15) including a core (19) for guiding light through a selected path in a mechanical structure (22) subject to strain, and an optical source (33) for injecting broadband light into said core of the optical waveguide, said core being characterized in that it is impressed at each measurement location of the structure (22) at which strain is to be determined with at least one periodic grating (16) that modifies the reflection and transmission spectra of the injected broadband light under conditions of and in dependence on local strain or temperature variation, said periodic gratings (16) being constituted by a series of periodic refractive index variations extending across and over the entire cross section of said core (19) which has a constant cross section also in the region of the grating.

2. The strain sensor of claim 1, further characterized in that said strain sensor includes means (37) for analyzing shifts in the spectrum of said reflected and transmitted broadband light to determine the magnitude of strain in said mechanical structure (22) at each said measurement location.

3. The strain sensor of claim 1, further characterized in that said core is impressed at each grating location (A,B,C) with at least two gratings each reflective to a different wavelength, whereby temperature and strain variations can independently be determined.

4. The strain sensor of claim 1, characterized in that said optical waveguide (15) further includes a cladding surrounding said core (19), that said at least one grating (16) has a predetermined grating spacing and is permanently provided in a grating region (A,B,C) of said core (19) prior to the use of the optical fiber (15) in the structure (22) with attendant permanent change in the index of refraction of the core (19) in correspondence with the grating spacing;

that said optical source (33) comprises means for launching into one end of said core (19) optical radiation covering a broad band of optical wavelengths and including at least one characteristic radiation component having a wavelength that is so related to the actual grating spacing under the stress conditions then existing at the measurement location of the structure (22) that said characteristic radiation component is at least partially reflected from said grating (16) for propagation through said core (19) back toward said one end of said core (19), and

that means (37) are provided for evaluating the optical radiation emerging from at least one of the ends of said core (19) to form a measurement representative of the strain at the measurement location of the structure (22), including means for analyzing the emerging optical radiation for the presence and intensity of said characteristic radiation component as an indication of the magnitude of the strain.

5. The strain sensor of claim 4, wherein said measurement location (A,B,C) includes at least one additional grating (16) similar to said one grating (16), but having a predetermined grating spacing different from that of said one grating;

wherein said launching means is further operative for issuing at least one additional characteristic radiation component having a wavelength that is so related to the actual grating spacing of said additional grating under the stress conditions then existing at the measurement location of the structure (22) that said additional characteristic radiation component is at least partially reflected from said additional grating for propagation through said core (19) back toward said one end of said core (19); and

wherein said evaluating means (37) is also operative for analyzing the emerging optical radiation for the presence and intensity of said additional characteristic radiation component as an indication of the magnitude of the strain.

6. The strain sensor of claim 5, wherein said additional grating (16) is situated at a region of said measurement location (A,B,C) that is spaced along said optical fiber (15) from the region of said one grating.

7. The strain sensor of claim 5, wherein said additional grating is situated in a region of said measurement location (A,B,C) which region is at least partially coextensive with the region of said one grating.

8. The strain sensor of claim 5, wherein said characteristic radiation component and said additional characteristic components are first and second characteristic wavelengths and said evaluating means comprises means to derive therefrom a temperature corrected measurement of the strain within said measurement location.

**Patentansprüche**

1. Dehnungssensor mit einem optischen Wellenleiter (15), der einen Kern (19) enthält, zum Führen von Licht auf einem ausgewählten Weg in einem mechanischen Gebilde (22), das einer Beanspruchung ausgesetzt ist, und einer optischen Quelle (33) zum Injizieren von Breitbandlicht in den Kern des optischen Wellenleiters, wobei der Kern dadurch gekennzeichnet ist, daß in ihn an jeder Meßstelle des Gebildes (22), an der Dehnung bestimmt werden soll, wenigstens ein periodisches Gitter (16) eingeprägt ist, welches die Reflexions- und Transmissionsspektren des injizierten Breitbandlichtes unter Bedingungen und in Abhängigkeit von lokaler Dehnungs- oder Temperaturvariation modifiziert, wobei das periodische Gitter (16) aus einer Serie von periodischen Brechungsindexvariationen besteht, die sich durch und über den gesamten Querschnitt des Kerns (19) erstrecken, der einen konstanten Querschnitt auch in dem Gebiet des Gitters hat.

2. Dehnungssensor nach Anspruch 1, weiter dadurch gekennzeichnet, daß der Dehnungssensor eine Einrichtung (37) aufweist zum Analysieren von Verschiebungen in dem Spektrum des reflektierten und durchgelassenen Breitbandlichtes, um die Größe der Dehnung in dem mechanischen Gebilde (22) an jeder Meßstelle zu bestimmen.

3. Dehnungssensor nach Anspruch 1, weiter dadurch gekennzeichnet, daß in den Kern an jeder Gitterstelle (A, B, C) wenigstens zwei Gitter eingeprägt sind, von denen jedes für eine andere Wellenlänge reflektierend ist, wodurch Temperatur- und Dehnungsvariationen unabhängig bestimmt werden können.

4. Dehnungssensor nach Anspruch 1, dadurch gekennzeichnet, daß der optische Wellenleiter (15) weiter eine Umhüllung aufweist, die den Kern (19) umgibt, daß das wenigstens eine Gitter (16) einen vorbestimmten Gitterabstand hat und in einem Gittergebiet (A, B, C) des Kerns (19) vor dem Gebrauch der optischen Faser (15) in dem Gebilde (22) permanent hergestellt wird, mit davon begleiteter permanenter Änderung im Brechungsindex des Kerns (19) entsprechend dem Gitterabstand; daß die optische Quelle (33) eine Einrichtung aufweist zum Aussenden von optischer Strahlung in ein Ende des Kerns (19), die ein breites Band von optischen Wellenlängen abdeckt und wenigstens eine charakteristische Strahlungskomponente enthält, welche eine Wellenlänge hat, die so auf den tatsächlichen Gitterabstand unter den Spannungsbedingungen, die dann an der Meßstelle des Gebildes (22) existieren, bezogen ist, daß die charakteristische Strahlungskomponente wenigstens teilweise von dem Gitter (16) reflektiert wird, um sich durch den Kern (19) zurück zu dem einen Ende des Kerns (19) auszubreiten, und daß eine Einrichtung (37) vorgesehen ist zum Auswerten der optischen Strahlung, die an dem wenigstens einen der Enden des Kerns (19) austritt, um einen Meßwert zu bilden, der für die Dehnung an der Meßstelle des Gebildes (22) repräsentativ ist, mit einer Einrichtung zum Analysieren der austretenden optischen Strahlung auf das Vorhandensein und die Intensität der charakteristischen Strahlungskomponente hin als eine Anzeige der Größe der Dehnung.

5. Dehnungssensor nach Anspruch 4, wobei die Meßstelle (A, B, C) wenigstens ein zusätzliches Gitter (16) ähnlich dem einen Gitter (16) aufweist, das aber einen vorbestimmten Gitterabstand hat, der anders als der des einen Gitters ist; wobei die Aussendeeinrichtung weiter in der Lage ist, wenigstens eine zusätzliche charakteristische Strahlungskomponente abzugeben, die eine Wellenlänge hat, welche so auf den tatsächlichen Gitterabstand des zusätzlichen Gitters unter den Spannungsbedingungen, die dann an der Meßstelle des Gebildes (22) existieren, bezogen ist, daß die zusätzliche charakteristische Strahlungskomponente wenigstens teilweise an dem zusätzlichen Gitter reflektiert wird, um sich durch den Kern (19) zurück zu dem einen Ende des Kerns (19) auszubreiten; wobei die Auswerteeinrichtung (37) außerdem in der Lage ist, die austretende optische Strahlung auf das Vorhandensein und die Intensität der zusätzlichen charakteristischen Strahlungskomponente hin als eine Anzeige der Größe der Dehnung zu analysieren.

6. Dehnungssensor nach Anspruch 5, wobei sich das zusätzliche Gitter (16) in einem Gebiet der Meßstelle (A, B, C) befindet, die Längs der optischen Faser (15) von dem Gebiet des einen Gitters beabstandet ist.

7. Dehnungssensor nach Anspruch 5, wobei sich das zusätzliche Gitter in einem Gebiet der Meßstelle (A, B, C) befindet, das wenigstens teilweise die gleiche Ausdehnung wie das Gebiet des einen Gitters hat.

8. Dehnungssensor nach Anspruch 5, wobei die charakteristische Strahlungskomponente und die zusätzlichen charakteristischen Komponenten erste und zweite charakteristischen Wellenlängen sind und die Auswerteeinrichtung eine Einrichtung aufweist, um daraus einen temperaturkorrigierten Meßwert der Dehnung innerhalb der Meßstelle zu gewinnen.

**Revendications**

1. Un détecteur de contrainte comprenant un guide d'onde (15) optique incluant une âme (19) pour guider de la lumière à travers un chemin sélectionné dans une structure mécanique (22) soumise à une contrainte, et une source optique (33) pour injecter de la lumière à large bande dans ladite âme du guide d'onde optique, ladite âme étant caractérisée en ce qu'elle est empreinte à chaque emplacement de mesure de la structure (22) à laquelle une contrainte est à déterminer avec au moins un réseau périodique (16) qui modifie le spectre de réflexion et de transmission de la lumière à large bande injectée dans des conditions de contrainte ou de variation de température locales et en fonction de celles-ci, ledit réseau périodique (16) étant constitué par une série de variations d'indices de réfraction périodiques s'étendant à travers et audessus de la section transversale entière de ladite âme (19), qui a une section transversale constante, aussi dans la région du réseau.

2. Le détecteur de contrainte de la revendication 1, caractérisé de plus en ce que ledit détecteur de contrainte inclut des moyens (37) pour analyser des décalages dans le spectre de ladite lumière à large bande réfléchie et transmise, afin de déterminer l'amplitude de la contrainte dans ladite structure mécanique (22) à chaque dit emplacement de mesure.

3. Le détecteur de contrainte de la revendication 1, caractérisé de plus en ce que ladite âme est empreinte à chaque emplacement de réseau (A, B, C) avec au moins deux réseaux réfléchissant chacun a une longueur d'onde différente, grâce à quoi les variations de température et de contrainte peuvent être déterminées indépendamment.

4. Le détecteur de contrainte de la revendication 1, caractérisé en ce que ledit guide d'onde (15) optique inclut de plus un gainage entourant ladite âme (19) ;

que ledit réseau (16) a un espacement de réseau prédéterminé et est pourvu en permanence, dans une région de réseau (A, B, C) de ladite âme (19), avant l'utilisation de la fibre optique (15) dans la structure (22), avec un changement permanent associé dans l'indice de réfraction de l'âme (19) en correspondance avec l'espacement de réseau ;

que ladite source optique (33) comprend des moyens pour envoi dans une extrémité de ladite âme (19) d'un rayonnement optique couvrant une large bande de longueurs d'onde optiques et incluant au moins un composant de rayonnement caractéristique ayant une longueur d'onde, qui est ainsi en relation avec l'espacement de réseau présent dans les conditions de contrainte existant alors à l'emplacement de mesure de la structure (22), que ledit composant de rayonnement caractéristique est au moins partiellement réfléchi à partir dudit réseau (16) pour propagation à travers ladite âme (19) en retour vers cette dite extrémité de ladite âme (19) et,

que des moyens (37) sont procurés pour évaluer le rayonnement optique émergeant à partir d'au moins une des extrémités de ladite âme (19), afin de former une mesure représentative de la contrainte à l'emplacement de mesure de la structure (22), incluant des moyens pour analyser le rayonnement optique émergeant pour la présence et l'intensité dudit composant de rayonnement caractéristique, comme une indication de l'amplitude de la contrainte.

5. Le détecteur de contrainte de la revendication 4, dans lequel ledit emplacement de mesure (A, B, C) inclut au moins un réseau (16) additionnel similaire audit premier réseau (16), mais ayant un espacement de réseau prédéterminé différent de celui dudit premier réseau ;

dans lequel lesdits moyens d'envoi sont de plus opérationnels pour émettre au moins un composant de rayonnement caractéristique additionnel ayant une longueur d'onde qui est ainsi en relation avec l'espacement de réseau présent dudit réseau additionnel dans les conditions de contrainte existant alors à l'emplacement de mesure de la structure (22), que ledit composant de rayonnement caractéristique additionnel est au moins partiellement réfléchi à partir dudit réseau additionnel pour propagation à travers ladite âme (19) en retour vers ladite extrémité de ladite âme (19) ; et

dans lequel lesdits moyens d'évaluation (37) sont aussi opérationnels pour analyser le rayonnement optique émergeant pour la présence et l'intensité dudit composant de rayonnement caractéristique additionnel, comme une indication de l'amplitude de la contrainte.

6. Le détecteur de contrainte de la revendication 5, dans lequel ledit réseau additionnel (16) est situé à une région dudit emplacement de mesure (A, B, C), qui est espacée le long de ladite fibre optique (15) à partir de la région dudit premier réseau.

7. Le détecteur de contrainte de la revendication 5, dans lequel ledit réseau additionnel est situé dans une région dudit emplacement de mesure (A, B, C), laquelle région est au moins partiellement coextensive avec la région dudit premier réseau.

8. Le détecteur de contrainte de la revendication 5, dans lequel, ledit composant de rayonnement caractéristique et lesdits composants caractéristiques additionnels sont des première et seconde longueurs d'onde caractéristiques et lesdits moyens d'évaluation comprennent des moyens afin de dériver à partir de ceux-ci une mesure corrigée au point de vue température de la contrainte à l'intérieur dudit emplacement de mesure.

FIG.1

LIGHT SOURCE 33

BEAM SPLITTER 34

SPECTROMETER 37

LENS 33'

19'

16

C

B

A

19

13

15

22

FIG.2A

FIG.2B

FIG.2C

FIG.3

FIG. 4